# DEMANDE DE BREVET EUROPEEN

(11) **EP 3 552 694 A1**
(43) Date de publication de la demande: **16.10.2019**
(21) Numéro de dépôt: 18167349.2
(22) Date de dépôt: 13.04.2018
(51) Int. Cl.: B01F 13/02, A23L 19/00, A23L 2/02, B65D 88/74

(54) **CONTENEUR POUR UNE PRÉPARATION À BASE DE FRUIT(S) ET/OU LÉGUME(S), PROCÉDÉ ET INSTALLATION METTANT EN OEUVRE UN TEL CONTENEUR**

(71) Demandeur: Zuegg SPA, 66200 Elne (FR)
(72) Inventeur: JACQUET, Pascal, 66200 ALENYA (FR)
(74) Mandataire: IPAZ

(57) **Abrégé**

La présente invention concerne un conteneur (200) pour préparation liquide ou semi-liquide, en particulier de fruits et/ou de légumes, comprenant un réservoir (102) pour recevoir ladite préparation (104), caractérisé en ce qu'il comprend en outre :
- au moins une ouverture (204) d'injection d'un gaz neutre dans la préparation (104) se trouvant dans ledit réservoir (102) pour brasser ladite préparation (104) ; et
- au moins une ouverture d'évacuation (210) pour évacuer ledit gaz neutre injecté hors dudit réservoir (102).

## Description

### Domaine technique

La présente invention concerne un conteneur pour le transport, la conservation et l'utilisation d'une préparation à base de fruit(s) ou de légume(s). Elle concerne également un procédé d'utilisation d'un tel conteneur ainsi qu'une installation mettant en oeuvre un tel conteneur.

Le domaine de l'invention est le domaine des conteneurs pour le transport, la conservation et l'utilisation d'une préparation à base de fruit(s) et/ou de légume(s).

### État de la technique

Les fruits et légumes sont utilisés pour la fabrication de nombreux produits de consommation. Par exemple, une préparation à base de fruits peut être consommée directement. Elle peut aussi être utilisée pour la fabrication de produits laitiers, des glaces, des fourrages etc.

La préparation se présente sous la forme d'un mélange comprenant des morceaux de fruits, ou des fruits broyés, et une phase liquide qui peut être obtenue par le jus provenant des fruits auquel est ajouté, dans la plupart des cas, de l'eau. Selon les applications, la préparation peut aussi comprendre du sucre.

Généralement, la préparation est introduite dans un container pour sa conservation, son transport et sa réutilisation, in situ à sur un autre site, en une seule ou plusieurs fois.

Cependant, lors de son entreposage ou son transport, la préparation subit une sédimentation, ou un déphasage, dans le container provoquant une séparation de la phase liquide. Le mélange n'est alors plus homogène, et ne peut pas être utilisé de manière adéquate.

Une première solution consiste à ajouter des stabilisants, pour diminuer, voire éviter, le phénomène de déphasage et épaissir la préparation. Cette solution implique plus d'ingrédients à utiliser.

Une deuxième solution consiste à secouer le conteneur avant chaque utilisation, pour mélanger la préparation qui s'y trouve. Cette solution nécessite une installation lourde, coûteuse, tout en étant chronophage et présentant des risques de dégradation du conteneur, et donc de contamination microbiologique de la préparation se trouvant dans le conteneur.

Un but de la présente invention est de remédier aux inconvénients précités.

Un autre but de la présente invention est de proposer un conteneur pour préparation de fruit(s) permettant une homogénéisation de ladite préparation avant son utilisation, de manière simple, rapide, moins coûteuse et sans risque de dégradation dudit conteneur et sans besoin d'utiliser des stabilisants.

### Exposé de l'invention

L'invention permet d'atteindre au moins un des objectifs précités par un conteneur pour préparation liquide ou semi-liquide, en particulier de fruits et/ou de légumes, comprenant un réservoir pour recevoir ladite préparation.

Le conteneur selon l'invention est caractérisé en ce qu'il comprend en outre :
- au moins une ouverture d'injection d'un gaz neutre dans la préparation se trouvant dans ledit réservoir pour brasser ladite préparation ; et
- au moins une ouverture d'évacuation pour évacuer ledit gaz neutre injecté hors dudit réservoir, et en particulier hors dudit conteneur.

Ainsi, le conteneur selon l'invention prévoit de réaliser un brassage de la préparation par injection d'un gaz neutre de sorte à brasser, ou à mélanger, la préparation afin de la rendre homogène, en vue ou lors, du prélèvement de la préparation depuis le conteneur. L'injection du gaz dans le réservoir est réalisée grâce à une ou plusieurs ouvertures d'injection positionnées de sorte à injecter le gaz neutre au coeur de la préparation de sorte que la préparation est mise en mouvement dans le réservoir par le gaz injecté.

Ainsi, le conteneur selon l'invention permet d'éviter l'utilisation de stabilisants pour la préservation de l'homogénéité de la préparation.

De plus, le conteneur selon l'invention permet de réaliser une homogénéisation de la préparation sans avoir à bouger/secouer le conteneur : ce qui est plus simple et plus rapide à mettre en oeuvre, et ne risque pas de dégrader le conteneur.

Enfin, le brassage par injection d'un gaz neutre permet d'éviter l'utilisation, dans le conteneur, d'un brasseur/mélangeur mécanique, évitant ainsi une architecture mécanique complexe à intégrer dans le conteneur.

Le gaz neutre utilisé peut être de l'azote, du CO₂ ou tout autre gaz neutre vis-à-vis de la préparation se trouvant dans le conteneur.

Le gaz neutre peut être toujours de même nature, par exemple de l'azote, ou peut être différent en fonction de la préparation.

En particulier, une ou plusieurs ouvertures d'injection peuvent être plongées dans la préparation.

Préférentiellement, au moins une ouverture d'injection peut se trouver en partie basse du conteneur, ou en partie basse du réservoir dudit conteneur.

Ainsi, même si le réservoir est rempli partiellement, ladite ouverture d'injection permet une injection de gaz neutre au coeur de la préparation et il est possible de la brasser/mélanger.

En particulier, au moins une ouverture d'injection de gaz peut se trouver dans le tiers, ou dans le quart, inférieur du conteneur, ou du réservoir.

Plus généralement, le conteneur selon l'invention peut comprendre au moins une ouverture, ou un conduit, de prélèvement de la préparation hors du réservoir. Une telle ouverture de prélèvement, ou un tel conduit de prélèvement, est généralement située en partie basse du réservoir, pour des raisons évidentes.

Avantageusement, au moins une ouverture d'injection de gaz neutre peut se trouver du côté de ladite ouverture de prélèvement.

Avantageusement, au moins une ouverture d'injection peut être formée, ou disposée, sur une paroi du réservoir.

Dans ce cas, l'ouverture d'injection peut être alimentée selon différents exemples non limitatifs et qui peuvent être combinés entre eux :
- par un conduit/tuyau d'amené de gaz,
- par une double paroi dans laquelle le gaz à injecter circule jusqu'à ladite ouverture d'injection,
- par un connecteur dédié, raccordé directement à ladite ouverture d'injection : dans ce cas le connecteur ou l'ouverture d'injection traverse la paroi du conteneur.

Au moins une ouverture d'injection, peut avantageusement être disposée au niveau d'une ouverture, ou d'un conduit, de prélèvement de la préparation depuis le réservoir.

Dans ce cas, avant le prélèvement de la préparation hors du réservoir, le gaz neutre est injecté dans le conduit de prélèvement et se propage jusqu'à l'intérieur du réservoir par ledit conduit de prélèvement.

Suivant un exemple de réalisation, l'ouverture d'injection peut être formée directement dans une paroi du conduit de prélèvement.

Suivant un autre exemple de réalisation, l'ouverture d'injection peut être formée sur une pièce additionnelle venant se raccorder au conduit de prélèvement, par exemple au niveau de son extrémité libre. La pièce additionnelle peut être enlevée lors du prélèvement de la préparation. Alternativement, la pièce additionnelle peut être une pièce de conduit dimensionnée pour laisser passer la préparation lors de son prélèvement : dans ce cas la pièce additionnelle peut être laissée en place lors du prélèvement de la préparation.

Suivant un exemple de réalisation préféré, au moins une ouverture d'injection peut être formée sur un injecteur, en particulier longitudinal, plongeant dans le réservoir, en particulier depuis une paroi dudit réservoir.

De manière non limitative, l'injecteur peut présenter une section très faible comparée à sa longueur.

Suivant un exemple de réalisation, l'injecteur peut se présenter sous la forme d'une tige plongeant dans le réservoir depuis une paroi dudit réservoir.

L'injecteur peut être solidaire d'une paroi quelconque du réservoir, ou dudit conteneur.

L'injecteur peut être pourvu d'une pluralité d'ouvertures d'injection distribuées le long dudit injecteur, en particulier lorsqu'il se présente sous la forme d'une tige longitudinale.

Le conteneur selon l'invention peut comprendre un couvercle équipant le réservoir. Préférentiellement, l'injecteur peut être solidaire dudit couvercle, et plonger dans le réservoir depuis ledit couvercle.

Ainsi, il est possible d'ajouter un injecteur à un conteneur standard en modifiant uniquement le couvercle du réservoir, sans avoir à toucher au reste du conteneur, ce qui plus simple et moins coûteux à réaliser, et peut être réalisé dans un environnement restreint, in situ ou à distance, et sans avoir à transporter la totalité du conteneur.

Bien entendu, le conteneur selon l'invention peut en outre comprendre au moins une ouverture d'alimentation dudit conteneur en gaz neutre depuis une source externe.

La source externe peut être un réservoir de gaz neutre.

Alternativement, la source externe peut être un réseau de distribution de gaz neutre qui peut être présent sur le site d'utilisation.

Avantageusement, au moins une ouverture d'alimentation peut être équipée d'un filtre stérile, tel que par exemple un filtre de ventilation stérile, par exemple réalisée en PTFE (Polytétrafluoroéthylène).

Avantageusement, le filtre stérile peut être positionné à l'extérieur du réservoir.

Le filtre stérile peut être relié à l'ouverture d'alimentation directement ou au travers d'un connecteur équipant ladite ouverture.

Au moins une ouverture d'alimentation peut être pourvue, ou équipée, d'un raccord rapide, en particulier un raccord de type HANSEN.

Un tel connecteur permet de faciliter la connexion et la déconnexion de la source de gaz neutre au conteneur, ainsi que de tout autre composant tel qu'un filtre, un dispositif de surveillance de pression et/ou de débit, etc.

De plus, au moins une ouverture d'alimentation peut être pourvue d'une vanne.

Une telle vanne permet d'initier ou d'arrêter l'alimentation en gaz neutre du conteneur, et éventuellement de réguler le débit du gaz neutre alimentant le conteneur.

Avantageusement, au moins une ouverture d'évacuation peut être pourvue d'un raccord pour la récupération du gaz sortant du conteneur, en particulier du réservoir.

Un tel raccord peut en particulier être un raccord rapide, et encore plus particulièrement un raccord de type HANSEN.

Alternativement ou en plus, au moins une ouverture d'évacuation peut être pourvue d'un dispositif de dégazage, un dispositif de surveillance de pression ou de débit. Un tel dispositif peut être configuré pour autoriser le passage de gaz lorsque la pression à l'intérieur du réservoir est comprise dans une fourchette prédéterminée, tel que par exemple 0.8 à 1 bar.

Lors de l'utilisation du conteneur, le gaz neutre peut être injecté dans le conteneur à une pression prédéterminée, préférentiellement supérieure à 0.8 bar, par exemple comprise entre 0.8 et 1 bar.

Suivant un exemple de réalisation nullement limitatif, le conteneur selon l'invention comprend un couvercle équipé :
- d'au moins un injecteur de gaz neutre, longitudinal, plongeant dans le réservoir, et comportant une ou plusieurs ouvertures d'injection (204) de gaz neutre ; et
- d'au moins une ouverture d'évacuation du gaz neutre hors dudit réservoir.

L'injecteur peut se présenter sous la forme d'une tige, solidaire du couvercle, et plongeant dans le réservoir depuis ledit couvercle.

Suivant un autre aspect de la même invention, il est proposé un procédé d'utilisation d'un conteneur selon l'invention comprenant une préparation, en particulier une préparation liquide ou semi-liquide, et encore plus particulièrement une préparation à base de fruit(s) et/ou légume(s).

Le procédé selon l'invention peut comprend au moins une itération des étapes suivantes :
- injection de gaz neutre dans le réservoir pour brasser la préparation ; et
- prélèvement d'au moins une partie de ladite préparation.

L'étape d'injection peut durer 5 à 10 minutes, et en particulier jusqu'à 20 minutes.

L'étape d'injection peut être réalisée par injection de gaz neutre à une pression supérieure à la pression atmosphérique. En particulier, le gaz neutre peut être injecté dans le réservoir à une pression comprise entre 0.8 et 1 bar.

L'étape d'injection peut être réalisée par injection de gaz neutre à un débit compris entre 75L/min et 100L/min.

L'étape d'injection peut être réalisée avant l'étape de prélèvement. En particulier, l'étape de prélèvement peut débuter après l'arrêt de l'étape d'injection. Plus particulièrement, l'étape de prélèvement peut débuter après :
- l'arrêt de l'étape d'injection, et
- l'établissement, dans le réservoir, d'une pression comprise entre 0,8bar et 1 bar.

Alternativement, l'étape d'injection peut s'arrêter après le début de l'étape de prélèvement.

Suivant encore un autre aspect de l'invention, il est proposé une installation comprenant :
- un conteneur selon l'invention, et
- une source de gaz neutre prévue pour être reliée audit conteneur.

La source de gaz neutre peut être un réseau de gaz neutre.

Alternativement, la source de gaz neutre peut être un réservoir de gaz neutre

Selon l'invention, le gaz neutre provenant du conteneur peut être récupéré et réutilisé, éventuellement après une étape de traitement visant à nettoyer ce gaz neutre.

Alternativement, le gaz neutre provenant du conteneur peut ne pas être récupéré.

### Description des figures et modes de réalisation

D'autres avantages et caractéristiques apparaîtront à l'examen de la description détaillée d'exemples nullement limitatifs, et des dessins annexés sur lesquels :
- la FIGURE 1 est une représentation schématique d'un exemple non limitatif d'un conteneur selon l'art antérieur ; et
- les FIGURES 2-6 sont des représentations schématiques d'exemples non limitatifs d'un conteneur selon l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite, isolées des autres caractéristiques décrites, si cette sélection de caractéristiques est suffisante pour conférer un avantage technique ou pour différencier l'invention par rapport à l'état de la technique antérieur. Cette sélection comprend au moins une caractéristique de préférence fonctionnelle sans détails structurels, ou avec seulement une partie des détails structurels si cette partie uniquement est suffisante pour conférer un avantage technique ou pour différencier l'invention par rapport à l'état de la technique antérieur.

En particulier toutes les variantes et tous les modes de réalisation décrits sont combinables entre eux si rien ne s'oppose à cette combinaison sur le plan technique.

Sur les figures, les éléments communs à plusieurs figures conservent la même référence.

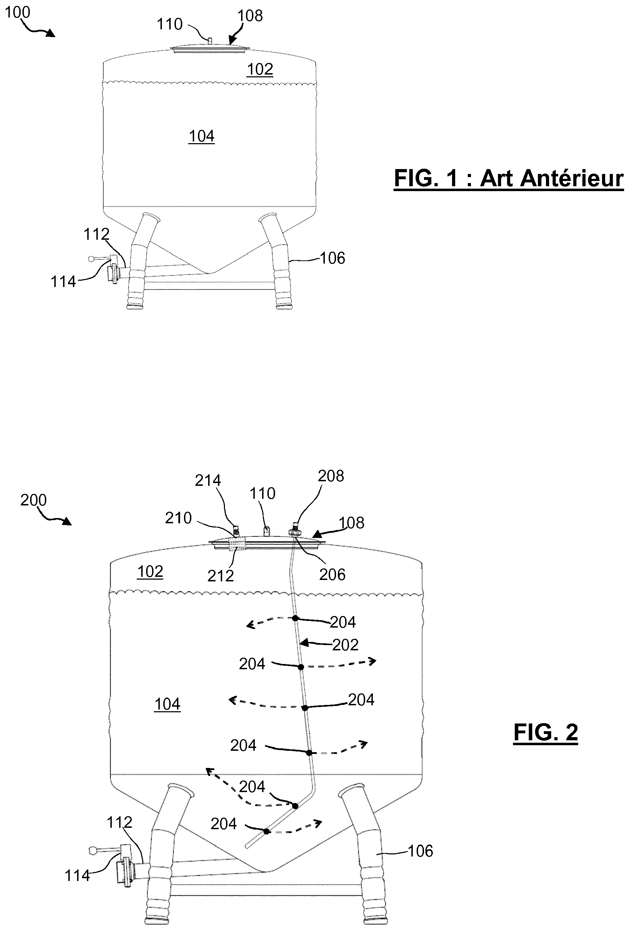

La FIGURE 1 est une représentation schématique d'un premier exemple d'un conteneur de l'état de la technique, pour préparation liquide ou semi-liquide.

Le conteneur 100, représenté sur la FIGURE 1, comprend un réservoir 102 prévu pour recevoir une préparation 104, disposé sur des pieds 106, de sorte que le conteneur 100 peut être posé au sol. Ainsi, le conteneur 100 comporte une partie haute et une partie basse.

Le conteneur 100 comporte, en sa partie haute, un couvercle 108 refermant le réservoir 102. Ce couvercle 108 peut être ouvert pour nettoyer le conteneur 100, avant et/ou après son utilisation.

Le couvercle 108 est équipé d'une soupape 110 permettant d'éviter que la pression dans le réservoir 102 dépasse une valeur maximale prédéterminée. Ainsi, lorsque la pression dans le réservoir 102 atteint la valeur maximale, la soupape 110 s'ouvre pour laisser échapper du gaz se trouvant dans le réservoir 102.

Le conteneur 100 est équipé d'un conduit 112 de prélèvement, ou de soutirage, de la préparation se trouvant dans le réservoir 102. Comme dans l'exemple représenté, le conduit de prélèvement 112 est généralement agencé en partie basse du réservoir 102 de sorte à être capable de prélever la totalité de la préparation qui s'y trouve. Le conduit de prélèvement 112 est équipé d'une vanne 114, autorisant ou interdisant, le passage de la préparation dans le conduit de prélèvement 112.

Le conteneur tel que représenté sur la FIGURE 1 souffre d'un inconvénient majeur qui est le déphasage de la solution se trouvant dans le réservoir, lors de son transport ou son entreposage.

La FIGURE 2 est une représentation schématique d'un exemple de réalisation non limitatif d'un conteneur selon l'invention.

Le conteneur 200, représenté sur la FIGURE 2, comprend tous les éléments du conteneur 100 de la FIGURE 1.

En plus de ces éléments, le conteneur 200 est équipé d'un injecteur 202, se présentant sous la forme d'une tige longitudinale, et comportant une pluralité d'ouvertures 204 d'injection de gaz au coeur de la préparation 104 se trouvant dans le réservoir.

L'injecteur 202 est solidaire du couvercle 108 et plonge dans le réservoir, et donc dans la préparation 104 qui s'y trouve, depuis ledit couvercle 108. L'injecteur 202 présente une longueur telle qu'il se prolonge depuis le couvercle jusqu'au fond du réservoir 102 et s'arrête juste avant de toucher le fond du réservoir 102.

Dans l'exemple représenté sur la FIGURE 2, l'injecteur 202 présente une partie distale repliée pour se conformer à la forme du réservoir 102 du côté du fond dudit réservoir 102.

L'injecteur peut être réalisé avec tout matériau compatible avec la préparation 104, tel que par exemple en plastique alimentaire, ou préférentiellement en inox.

Les ouvertures d'injection 204 peuvent avoir toutes la même taille. Alternativement, les ouvertures d'injection 204 peuvent avoir des tailles différentes, en particulier des tailles croissantes vers l'extrémité distale de l'injecteur 202, de sorte que le gaz neutre atteigne l'extrémité distale avec une pression suffisante.

Le conteneur 200 comprend également une ouverture d'alimentation 206 pour alimenter l'injecteur 202 en gaz neutre.

Dans l'exemple représenté sur la FIGURE 2, l'ouverture d'alimentation 206 est aménagée dans le couvercle 108 et l'injecteur 202 est alimenté au travers du couvercle 108. L'ouverture d'alimentation 206 est équipée d'un raccord rapide 208, de type raccord HANSEN pour connexion/déconnexion rapide et ergonomique à une source de gaz neutre.

Bien que non représenté sur la FIGURE 2, l'ouverture d'alimentation 206 peut être équipée, en plus, d'une combinaison quelconque des organes suivants :
- un filtre stérile,
- un dispositif de mesure, et/ou de suivi, de débit/pression du gaz neutre injecté dans le réservoir 102 ; et/ou
- une vanne.

Le conteneur 200 comprend également une ouverture 210 d'évacuation de gaz hors du réservoir 102.

Dans l'exemple représenté sur la FIGURE 2, l'ouverture d'évacuation 210 est aménagée dans le couvercle 108.

L'ouverture d'évacuation 210 est équipée d'un filtre stérile 212, permettant d'une part de filtrer le gaz sortant du réservoir 102 et d'autre part d'éviter l'entrée de particules polluantes dans le réservoir 102 par l'ouverture d'évacuation 210. Dans l'exemple représenté sur la FIGURE 2, le filtre stérile 212 est solidaire du couvercle 108 et est positionné du côté du réservoir 102.

L'ouverture d'évacuation 210 peut aussi être équipé d'un raccord rapide 214, de type raccord HANSEN, permettant une connexion/déconnexion rapide de l'ouverture d'évacuation 210 à une combinaison quelconque des organes suivants :
- un dispositif de mesure, et/ou de suivi, de débit/pression du gaz extrait du réservoir 102 ; et/ou
- un dispositif de récupération du gaz extrait du réservoir 102.

L'ouverture d'évacuation 210 peut aussi être utilisée pour injecter un gaz neutre lors du soutirage de la préparation 104 par le conduit de prélèvement 112.

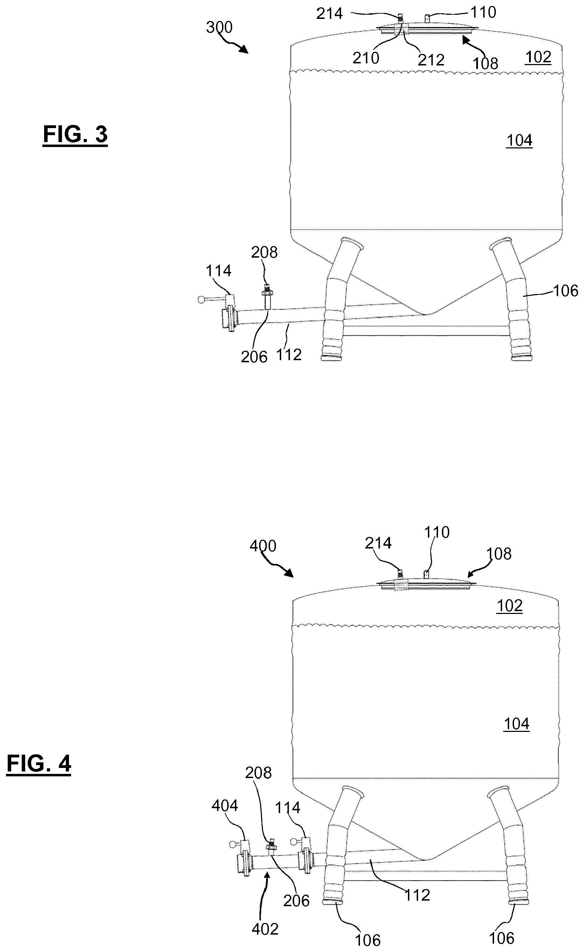

La FIGURE 3 est une représentation schématique d'un autre exemple de réalisation non limitatif d'un conteneur selon l'invention.

Le conteneur 300 représenté sur la FIGURE 3, comprend tous les éléments du conteneur 200 de la FIGURE 2, sauf l'injecteur 202.

De plus, dans le conteneur 300, à la différence du conteneur 200, l'ouverture d'alimentation 206 du gaz neutre est aménagée sur le conduit de prélèvement 112.

Le gaz est injecté dans le réservoir par l'intermédiaire du conduit de prélèvement 112. En particulier, le gaz neutre est injecté dans le conduit de prélèvement 112, parcourt ce dernier, pour entrer dans le réservoir 102 et entrainer un brassage de la préparation 104 se trouvant dans le réservoir.

La FIGURE 4 est une représentation schématique d'un autre exemple de réalisation non limitatif d'un conteneur selon l'invention.

Le conteneur 400 représenté sur la FIGURE 4, comprend tous les éléments du conteneur 300 de la FIGURE 3.

De plus, le conteneur 400 comprend, à la différence du conteneur 300, un tube additionnel 402 qui vient se connecter, de manière étanche, sur l'extrémité libre du tube de prélèvement 112.

L'ouverture d'alimentation 206 du gaz neutre est aménagée sur ce tube additionnel 402. Le tube additionnel 402 comprend aussi une vanne 404 positionnée tel que l'ouverture d'alimentation se trouve entre la vanne 404 et le réservoir 102.

Le gaz neutre est injecté dans le réservoir 102 par l'intermédiaire du tube additionnel 402. En particulier, le gaz neutre est injecté dans le tube additionnel 402, puis passe dans le conduit de prélèvement 112, parcourt ce dernier, pour entrer dans le réservoir 102 et entrainer un brassage de la préparation 104 se trouvant dans le réservoir 102.

De plus, le tube additionnel 402 est dimensionné pour laisser passer la préparation lors de son prélèvement. Ainsi, le tube additionnel peut être laissé en place lors de prélèvement de la préparation 104.

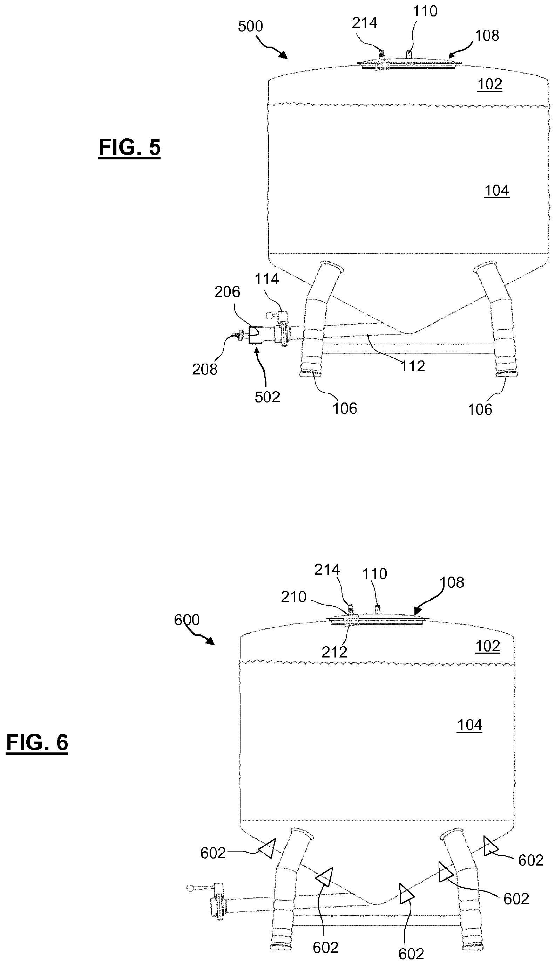

La FIGURE 5 est une représentation schématique d'un autre exemple de réalisation non limitatif d'un conteneur selon l'invention.

Le conteneur 500 représenté sur la FIGURE 5, comprend tous les éléments du conteneur 300 de la FIGURE 3.

De plus, le conteneur 500 comprend, à la différence du conteneur 300, un bouchon 502 qui vient se connecter, de manière étanche, sur l'extrémité libre du tube de prélèvement 112.

L'ouverture d'alimentation 206 du gaz neutre est aménagée sur ce bouchon additionnel 502.

Le gaz neutre est injecté dans le réservoir 102 par l'intermédiaire du bouchon additionnel 502. En particulier, le gaz neutre est injecté dans le bouchon additionnel 502, puis passe dans le conduit de prélèvement 112, parcourt ce dernier, pour entrer dans le réservoir 102 et entrainer un brassage de la préparation 104 se trouvant dans le réservoir 102.

Lors du prélèvement de la préparation 104, le bouchon additionnel 502 est enlevé.

Dans les exemples décrits en référence aux FIGURES 3-5, un injecteur peut être utilisé, de manière similaire au conteneur 200 de la FIGURE 2. Dans ce cas, l'injecteur peut être connecté à l'ouverture d'alimentation 206 prévue sur le conduit de prélèvement 112, ou sur le tube additionnel 402, ou encore sur le bouchon 502, parcourir le conduit de prélèvement 112 et atteindre le réservoir 102 pour injecter le gaz neutre directement au le coeur de la préparation 104 dans le réservoir 102.

La FIGURE 6 est une représentation schématique d'un autre exemple de réalisation non limitatif d'un conteneur selon l'invention.

Le conteneur 600 de la FIGURE 6 comprend tous les éléments du conteneur 100 de la FIGURE 1, ainsi que l'ouverture d'évacuation 210 que l'on retrouve dans les conteneurs 200, 300, 400 et 500.

A la différence de ces conteneurs, le conteneur 600 comprend plusieurs injecteurs 602 aménagés dans les parois du conteneur 600 et débouchant dans le réservoir 102, en partie basse dudit réservoir 102.

Les injecteurs 602 peuvent être alimentés individuellement, ou au moyen d'un circuit d'alimentation (non représenté).

Bien sûr, l'invention n'est pas limitée aux exemples qui viennent d'être décrits et de nombreux aménagements peuvent être apportés à ces exemples sans sortir du cadre de l'invention.

## Revendications

1. Conteneur (200;300;400;500;600) pour préparation liquide ou semi-liquide, en particulier de fruits et/ou de légumes, comprenant un réservoir (102) pour recevoir ladite préparation (104), **caractérisé en ce qu'**il comprend en outre :
- au moins une ouverture (204,206) d'injection d'un gaz neutre dans la préparation (104) se trouvant dans ledit réservoir (102) pour brasser ladite préparation (104) ; et
- au moins une ouverture d'évacuation (210) pour évacuer ledit gaz neutre injecté hors dudit réservoir (102).

2. Conteneur (200;300;400;500;600) selon la revendication précédente, **caractérisé en ce qu'**au moins une ouverture d'injection (204,206) se trouve en partie basse dudit conteneur (200;300;400;500;600), en particulier dans le quart inférieur dudit conteneur (200;300;400;500;600) .

3. Conteneur (600) selon l'une quelconque des revendications précédentes, **caractérisé en ce qu'**au moins une ouverture d'injection (602) est formée sur une paroi du réservoir (102).

4. Conteneur (300;400;500) selon l'une quelconque des revendications précédentes, **caractérisé en ce qu'**au moins une ouverture d'injection (206) est disposée au niveau d'un conduit de prélèvement (112) de la préparation (104) depuis le réservoir (102).

5. Conteneur (200;600) selon l'une quelconque des revendications précédentes, **caractérisé en ce qu'**au moins une ouverture d'injection (204) est formée sur un injecteur (202;602), en particulier longitudinal, plongeant dans le réservoir (102).

6. Conteneur (200) selon la revendication précédente, **caractérisé en ce qu'**il comprend un couvercle (108) équipant le réservoir (102), et **en ce que** l'injecteur (202) est solidaire dudit couvercle (108) et plonge dans le réservoir (102) depuis ledit couvercle (108).

7. Conteneur (200;300;400;500;600) selon l'une quelconque des revendications précédentes, **caractérisé en ce qu'**il comprend au moins une ouverture (204) d'alimentation dudit conteneur (200;300;400;500;600) en gaz neutre depuis une source externe.

8. Conteneur (200;300;400;500) selon la revendication précédente, **caractérisé en ce qu'**au moins une ouverture d'alimentation (206) est équipée d'un filtre stérile.

9. Conteneur (200;300;400;500) selon l'une quelconque des revendications 7 ou 8, **caractérisé en ce qu'**au moins une ouverture d'alimentation est pourvue d'un raccord rapide (208), en particulier de type HANSEN.

10. Conteneur selon l'une quelconque des revendications 7 à 9, **caractérisé en ce qu'**au moins une ouverture d'alimentation est pourvue d'une vanne.

11. Conteneur (200;300;400;500;600) selon l'une quelconque des revendications précédentes, **caractérisé en ce qu'**au moins une ouverture d'évacuation (210) est pourvue d'un raccord (214) pour la récupération du gaz sortant du conteneur, en particulier un raccord rapide, et encore plus particulièrement un raccord de type HANSEN.

12. Conteneur (200) selon l'une quelconque des revendications précédentes, **caractérisé en ce qu'**il comprend un couvercle (108) équipé :
- d'au moins un injecteur de gaz neutre, longitudinal (202), plongeant dans le réservoir (102), et comportant une ou plusieurs ouvertures d'injection (204) de gaz neutre ; et
- d'au moins une ouverture (210) d'évacuation du gaz neutre hors dudit réservoir (102).

13. Procédé d'utilisation d'un conteneur (200;300;400;500;600) selon l'une quelconque des revendications précédentes, comprenant une préparation, **caractérisé en ce qu'**il comprend au moins une itération des étapes suivantes :
- injection de gaz neutre dans le réservoir (102) pour brasser la préparation ; et
- prélèvement d'au moins une partie de ladite préparation.

14. Installation comprenant :
- un conteneur (200;300;400;500;600) selon l'une quelconque des revendications 1 à 12, et
- une source de gaz neutre prévue pour être reliée audit conteneur.
